# EUROPÄISCHE PATENTSCHRIFT

(11) **EP 0 429 939 B1**
(45) Veröffentlichungstag und Bekanntmachung des Hinweises auf die Patenterteilung: **28.06.1995**
(21) Anmeldenummer: 90121608.5
(22) Anmeldetag: 12.11.1990
(51) Int. Cl.: B64C 13/04, G01D 5/34

(54) **Stellungssensor für Landeklappenhebel bei Flugzeugen**
Position sensor for flap lever in aircraft
Capteur de position de la manette des volets pour avion

(30) Priorität: 27.11.1989 DE 3939132
(43) Veröffentlichungstag der Anmeldung: 05.06.1991
(73) Patentinhaber: Bodenseewerk Gerätetechnik GmbH, 88662 Überlingen (DE)
(72) Erfinder: Kummle, Wolfgang, W-7777 Salem-Beuren (DE); Langner, Klaus, W-7770 Überlingen (DE); Neudörffer, Bernd, W-7767 Sipplingen (DE)
(74) Vertreter: Weisse, Jürgen, Dipl.-Phys. Patentanwalt

(56) Entgegenhaltungen:
- EP-A- 0 030 477
- EP-A- 0 348 816
- DE-U- 8 416 558
- US-A- 4 559 524
- NASA TECH BRIEF, N.T.I.S., TECH NOTES, Juni 1988, Seite 484, Springfield, VA,
- US; ""Thumball" auxiliary data-input device"

## Beschreibung

### Technisches Gebiet

Die Erfinding betrifft eine Landeklappensteuerung bei Flugzeugen mit einem Stellungssensor für Landeklappenhebel.

### Zugrundeliegender Stand der Technik

Eine Veröffentlichung ""Thumball" Auxiliary Data-Input Device" in NASA Tech Brief NTIS Tech Notes, Juni 1988, Seite 484, beschreibt einen in den Griff eines Steuerknüppels eingebauten Mechanismus mit einer aus der Stirnfläche dieses Griffes vorstehenden Kugel. Die Bewegung der Kugel um zwei zueinander senkrechte Achsen wird auf Codierscheiben übertragen, die optoelektronisch abgetastet werden. Dadurch können mit dem Daumen des Piloten Kursänderungen, eine Nicktrimmung, die Stellung eines Cursors auf dem Bildschirm einer Kathodenstrahlröhre oder irgendwelche anderen erforderlichen genauen Einstellungen vorgenommen werden.

Das DE-U-8 416 558 zeigt generell eine Positionsmeßeinrichtung mit einer optoelektronischen Codierscheibe.

An den Trageflächen von Flugzeugen sind "Vorflügel" und "Landeklappen" vorgesehen. Diese werden bei Start und Landung in verschiedene Winkelstellungen gefahren, um den Auftrieb zu erhöhen. Die Landeklappen werden hydraulisch betätigt. Die Hydraulik wird elektronisch gesteuert. Die Elektronik wiederum wird von einem "Landeklappenhebel" im Cockpit gesteuert. Bei bekannten Landeklappenhebeln dienen als Stellungssensoren eine Mehrzahl von mechanischen Schaltern in bestimmten Positionen, welche durch den Landeklappenhebel betätigbar sind und die Hebelstellung erfassen.

Diese Konstruktion erfordert viel Raum. Aus Gründen der Genauigkeit ist ein Getriebe erforderlich, um den von den Schaltern erfaßten Drehwinkel zu vergrößern. Es sind sehr genaue und aufwendige Schalter erforderlich. Die Schalter sind außerdem vibrationsempfindlich.

### Offenbarung der Erfindung

Der Erfindung liegt die Aufgabe zugrunde, eine Landeklappensteuerung bei Flugzeugen mit einem Stellungssensor für Landeklappenhebel einfach, preisgünstig und raumsparend aufzubauen.

Erfindungsgemäß wird diese Aufgabe dadurch gelöst, daß mit dem Landeklappenhebel über einer im Gehäuse des Stellungssensors drehbar gelagerten Eingangswelle eine Codierscheibe verbunden ist, deren Stellung durch einen optischen Sensor mit einer solchen Auflösung abtastbar ist, daß die an dem Landeklappenhebel eingegebenen Winkel direkt erfaßt werden können.

Es ergeben sich dabei kleine Abmessungen und geringes Gewicht. Durch den Wegfall teurer, elektromechanischer Schalter wird der Stellungssensor kostengünstiger. Außerdem entfällt das Getriebe zur Vergrößerung der Drehwinkel, da die Auflösung des Systems mit Codierscheibe und optischen Sensor so groß ist, daß die an dem Landeklappenhebel eingegebenen Winkel direkt erfaßt werden können.

Diese Konstruktion gibt die Möglichkeit, daß Codierscheibe und optischer Sensor vermehrfacht vorgesehen sind.

Bei einer bevorzugten Ausführung sind in dem Gehäuse des Stellungssensors weiterhin parallel zueinander und koaxial zu der Eingangswelle ringscheibenförmige Leiterplatten gehaltert. Auf den Leiterplatten sitzen optische Sensoren. Eine Codierscheibe ist drehfest mit der Eingangswelle verbunden, ragt zwischen die Leiterplatten und wirkt mit den optischen Sensoren zusammen.

Dabei können die optischen Sensoren Lichtschranken sein, von denen jeweils ein Sender auf einer und ein Empfänger auf der anderen Leiterplatte angeordnet ist. Dabei kann im Gehäuse und parallel zu den Leiterplatten und der Codierscheibe jeweils zwischen jeder Leiterplatte und der Codierscheibe eine Blendenscheibe angeordnet sein.

Bei einer besonders vorteilhaften Konstruktion für eine Vermehrfachung des Stellungssensors ist an einer Stirnwand des Gehäuses ein hohlzylindrischer Lagerträger befestigt, der in den Innenraum des Gehäuses hineinragt. Die Eingangswelle ist mittels wenigstens zweier Wälzlager in dem Lagerträger gelagert. In dem Gehäuse sind zwei Paare von parallelen ringförmigen Leiterplatten gehaltert. Dabei umgeben die Leiterplatten eines Paares den Lagerträger koaxial. Mit der Eingangswelle ist ein Kodierscheibenträger drehfest verbunden. Der Kodierscheibenträger greift mit einem topfförmigen Teil um den Lagerträger außen herum und trägt eine zwischen das besagte Paar von Leiterplatten ragende Kodierscheibe. Der Kodierscheibenträger weist ferner einen zweiten topfförmigen Teil auf, der mit dem besagten ersten topfförmigen Teil Rücken-an-Rücken angeordnet ist und eine zweite Kodierscheibe trägt, die zwischen das zweite Paar von Leiterplatten ragt.

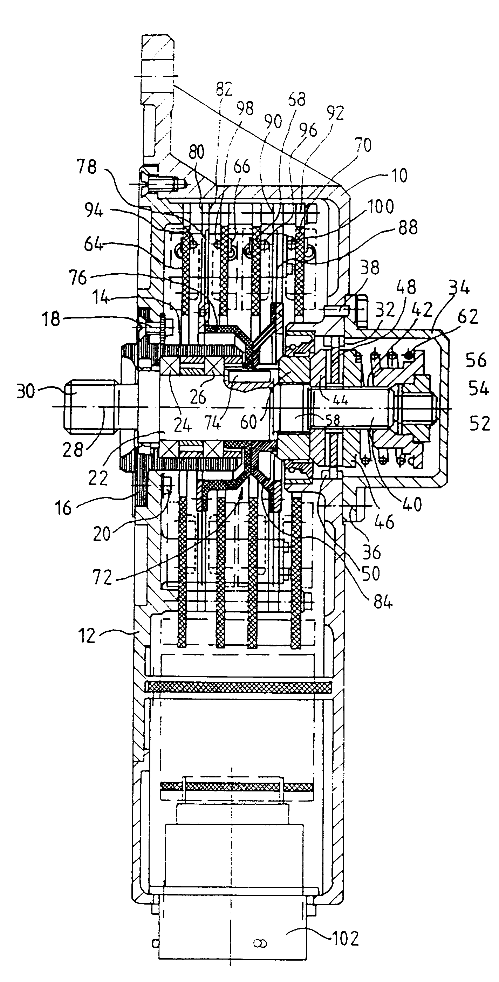

### Kurze Beschreibung der Zeichnung

Ein Ausführungsbeispiel der Erfindung ist nachstehend unter Bezugnahme auf die zugehörige Zeichnung näher erläutert, die einen Längsschnitt eines Stellungssensors für Landeklappenhebel bei Flugzeugen zeigt.

### Bevorzugte Ausführung der Erfindung

Ein flaches Gehäuse 10 ist durch einen Deckel 12 abgeschlossen. In dem Deckel 12 sitzt ein hohlzylindrischer Lagerträger 14. Der Lagerträger 14 weist an seinem äußeren Ende einen Flansch 16 auf, welcher durch Schrauben 18 und Muttern 20 mit dem Deckel 12 verbunden ist. In dem Lagerträger 14 ist eine Eingangswelle 22 in Wälzlagern 24 und 26 um eine Achse 28 drehbar gelagert. Die Eingangswelle 22 weist einen mit einer Keilverzahnung versehenen, durch den Deckel 12 hindurchragenden Kopf 30 auf. Dieser Kopf ist mit einem (nicht dargestellten) Landeklappenhebel verbindbar.

An dem inneren Ende ragt der Lagerträger 14 bis etwa zur Mitte in den Innenraum des Gehäuses 10 hinein.

Das Gehäuse 10 weist auf der dem Kopf 30 gegenüberliegenden Seite Durchbruch 32 auf. Der Durchbruch 32 ist durch eine Kappe 34 abgedeckt, die mit einem Flansch 36 durch Schrauben 38 mit dem Gehäuse 10 verbunden ist. In die Kappe 34 ragt ein Ende 40 der Eingangswelle 22. Das Ende 40 der Eingangswelle 22 ist mit einer Keilverzahnung 42 versehen. Auf dem Ende 40 und der Keilverzahnung 42 sind Bremsscheiben 44 und 46 axial beweglich aber unverdrehbar geführt. Zwischen den Bremsscheiben 44 und 46 sitzt eine Reibscheibe 48, die beiderseits mit Bremsbelägen versehen und in einer Innenverzahnung 50 auf der Innenseite des Durchbruchs 32 unverdrehbar im Gehäuse 10 gehalten ist. Auf einem mit einem Gewinde versehenen Ende 52 der Eingangswelle 22 sitzt eine Mutter 54. An der Mutter 54 stützt sich ein Federwiderlager 56 ab. Auf einem mit einem Gewinde versehenen Mittelteil 58 der Eingangswelle 22 sitzt eine Mutter 60. Eine Schraubenfeder 62 umgibt die Eingangswelle 22 und liegt einerseits an dem Federwiderlager 56 und andererseits an der Bremsscheibe 46 an. Auf diese Weise wird durch die Vorspannung der Schraubenfeder 62 die Bremsscheibe 44 von links in der Figur über die Mutter 60 nach rechts gegen die Reibscheibe 48 gedrückt, während gleichzeitig durch die Feder die Bremsscheibe 46 nach links gegen die Reibscheibe 48 gedrückt wird. Diese Anordnung bildet eine Rutschkupplung welche die Eingangswelle 22 und damit die Kodierscheiben 78 und 88 im Falle eines Bruches der Eingangswelle 22 in der jeweils eingenommenen Stellung reibschlüssig festhält.

In dem Gehäuse 10 sind zwei Paare von ringscheibenförmigen Leiterplatten 64, 66 und 68, 70 gehaltert. Die Leiterplatten 64, 66, 68, 70 liegen in Radialebenen bezogen auf die Achse 28. Sie sind somit parallel zueinander und weisen zentrale Durchbrüche auf, die koaxial zu der Achse 28 und der Eingangswelle 22 sind. Die Leiterplatten 64 und 66 eines Paares umgeben dabei den Lagerträger 14. Sie sind also axial im Bereich des Lagerträgers 14 angeordnet. Die anderen Leiterplatten 68 und 70 liegen in der Figur rechts von dem inneren Ende des Lagerträgers 14. Mit der Eingangswelle 22 ist ein Kodierscheibenträger 72 durch eine Nut- und -Federverbindung 74 drehfest verbunden. Der Kodierscheibenträger 72 greift mit einem topfförmigen Teil 70 um den Lagerträger 14 außen herum. Der topfförmige Teil 76 trägt an seinem Rand eine Kodierscheibe 78, welche zwischen das Paar 64, 66 von Leiterplatten ragt. In dem Gehäuse 10 sind weiterhin zwei Blendenscheiben 80 und 82 gehaltert. Die Blendenscheiben 80 und 82 sind zueinander und zu den Leiterplatten 64 und 66 parallel. Je eine Blendenscheibe 80 oder 82 ist zwischen jeder der Leiterplatten 64 bzw. 66 und der Kodierscheibe 78 angeordnet.

Der Kodierscheibenträger 72 weist einen zweiten topfförmigen Teil 84 auf, der mit dem ersten topfförmigen Teil 76 Rücken-an-Rücken angeordnet ist. Der zweite topfförmige Teil 84 trägt eine zweite Kodierscheibe 88. Die zweite Kodierscheibe 88 ragt zwischen das zweite Paar 68, 70 von Leiterplatten. Ab hier ist im Gehäuse 10 und parallel zu den Leiterplatten 68 und 70 und der Kodierscheibe 88 jeweils zwischen jeder Leiterplatte 68 und 70 und der Kodierscheibe 88 eine Blendenscheibe 90 bzw. 92 gehäusefest angeordnet.

Auf den Leiterplatten sitzen die optischen Sensoren. Die optischen Sensoren sind Lichtschranken, von denen jeweils ein Sender 94 bzw. 96 auf einer Leiterplatte 64 bzw. 68 und ein Empfänger 98 und 100 auf der anderen Leiterplatte 66 bzw. 70 angeordnet ist.

Die Leiterplatten enthalten weitere elektronische Bauteile. Die Ausgangssignale des Stellungssensors werden über einen Anschlußstecker 102 ausgegeben.

## Patentansprüche

1. Landeklappensteuerung bei Flugzeugen, mit einem Stellungssensor für Landeklappenhebel, **dadurch gekennzeichnet, daß** mit dem Landeklappenhebel über einer im Gehäuse (10) des Stellungssensors drehbar gelagerten Eingangswelle (22) eine Codierscheibe (78,80) verbunden ist, deren Stellung durch einen optischen Sensor (94,98;96,100) mit einer solchen Auflösung abtastbar ist, daß die von dem Landeklappenhebel eingegebenen Winkel direkt erfaßt werden können.

2. Landeklappensteuerung nach Anspruch 1, **dadurch gekennzeichnet, daß** Codierscheibe (78; 88) und optischer Sensor (94, 98; 96, 100) vermehrfacht vorgesehen sind.

3. Landeklappensteuerung nach Anspruch 1, **gekennzeichnet durch**
(a) wenigstens zwei in dem Gehäuse (10) parallel zueinander und koaxial zu der Eingangswelle gehalterte, ringscheibenförmige Leiterplatten (64, 66; 68, 70),
(b) optische Sensoren (94, 98; 96, 100) auf den Leiterplatten (64, 66; 68, 70) und
(c) eine Codierscheibe (78, 88), die drehfest mit der Eingangswelle (22) verbunden ist, zwischen die Leiterplatten (64, 66; 68, 70) ragt und mit den optischen Sensoren (94, 98; 96, 100) zusammenwirkt.

4. Landeklappensteuerung nach Anspruch 3, **dadurch gekennzeichnet, daß** die optischen Sensoren Lichtschranken (94, 98; 96, 100) sind, von denen jeweils ein Sender (94, 96) auf einer Leiterplatte (64, 68) und ein Empfänger (98, 100) auf der anderen Leiterplatte (66, 70) angeordnet ist.

5. Landeklappensteuerung nach Anspruch 4, **dadurch gekennzeichnet, daß** im Gehäuse (10) und parallel zu den Leiterplatten (64, 66; 68, 70) und der Codierscheibe (78, 88) jeweils zwischen jeder Leiterplatte (64, 66 bzw. 68, 70) und der Codierscheibe (78, 88) eine Blendenscheibe (80, 82; 90, 92) angeordnet ist.

6. Landeklappensteuerung nach den Ansprüchen 2 und 3, **dadurch gekennzeichnet, daß**
(a) an einer Stirnwand des Gehäuses (10) ein hohlzylindrischer Lagerträger (14) befestigt ist, der in den Innenraum des Gehäuses (10) hineinragt,
(b) die Eingangswelle (22) mittels wenigstens zweier Wälzlager (24, 26) in dem Lagerträger (14) gelagert ist,
(c) in dem Gehäuse (10) zweier Paare von parallelen ringscheibenförmigen Leiterplatten (64, 66; 68, 70) gehaltert sind, wobei die Leiterplatten (64, 68) eines Paares den Lagerträger (14) umgeben,
(d) mit der Eingangswelle (22) ein Codierscheibenträger (72) drehfest verbunden ist, der mit einem topfförmigen Teil (76) um den Lagerträger (14) außen herumgreift und eine zwischen das besagte Paar von Leiterplatten (64, 66) ragende Codierscheibe (78) trägt.

7. Landeklappensteuerung nach Anspruch 6, **dadurch gekennzeichnet, daß** der Codierscheibenträger (72) einen zweiten topfförmigen Teil (84) aufweist, der mit dem besagten ersten topfförmigen Teil (76) Rücken-an-Rücken angeordnet ist und eine zweite Codierscheibe (88) trägt, die zwischen das zweite Paar von Leiterplatten (68, 70) ragt.

## Claims

1. Landing flap control in aircraft, with a position sensor for landing flap lever, **characterized in that** a code disc (78,80) is connected with the landing flap lever through an input shaft (22) rotatably mounted in the housing (10), an optical sensor (94,98;96,100) being arranged to read out the position of the code disc with such resolution that the angles set by the landing flap lever can be directly detected.

2. Landing flap control as claimed in claim 1, **characterized in that** code disc (78;88) and optical sensor (94,98;96,100) are redundantly provided.

3. Landing flap control as claimed in claim 1, **characterized by**
(a) at least two mutually parallel and coaxial annular disc-shaped printed circuit boards (64,66;68,70) mounted in the housing (10),
(b) optical sensors (94,98;96,100) on the printed circuit boards, and
(c) a code disc (78,80), which is non-rotatably connected with the input shaft (22), extends between the printed circuit boards (64,66;68,70) and cooperates with the optical sensors (94,98;96,100).

4. Landing flap control as claimed in claim 3, **characterized in that** the optical sensors are light barriers (94,98;96,100), each of which comprises a transmitter (94,96) arranged on one printed circuit board and a receiver (98,100) arranged on the other printed circuit board.

5. Landing flap control as claimed in claim 4, **characterized in that** light stop discs (80,82;90,92) are arranged in the housing (10) and parallel to the printed circuit boards (64,66;68,70) and the code disc (78,88) between each printed circuit board (64,66 and 68,70, respectively) and the respective code disc (78,88).

6. Landing flap control as claimed in claims 2 and 3, **characterized in that**
(a) a hollow-cylindrical bearing support (14) is attached to one end wall of the housing (10) and extends into the interior of the housing (10),
(b) the input shaft (22) is mounted in the bearing support (14) by means of at least two antifriction bearings,
(c) two pairs of parallel, annular disc-shaped printed circuit boards (64,66;68,70) are held in the housing (10), the printed circuit boards (64,68) of one pair surrounding the bearing support (14),
(d) a code disc carrier (72) is non-rotatably connected with the input shaft (22) and has a pot-shaped part (76), which extends at the outside around the bearing support (14) and carries a code disc (78) extending between said pair if printed circuit boards.

7. Landing flap control as claimed in claim 6, **characterized in that** the code disc carrier (72) has a second pot-shaped part (84), which is arranged back-to-bach with said first pot-shaped part (76) and carries a second code disc (88), which extends between the second pair of printed circuit boards (68,70).

## Revendications

1. Commande de volet d'atterrissage pour avions munie d'un capteur de position pour des leviers de volet d'atterrissage, **caractérisée par le fait qu'** un disque de codage (78,80), dont la position est susceptible d'être analysée par un capteur optique (94,98;96,100) avec une telle résolution que les angles rapportés par le levier de volet d'atterrissage peuvent être directement enregistrés, est relié au levier de volet d'atterrissage par l'intermédiaire d'un arbre d'entrée (22) logé rotativement dans le boîtier (10) du capteur de position.

2. Commande de volet d'atterrissage selon la revendication 1, **caractérisée par le fait que** disque de codage (78;88) et capteur optique (94,98;96,100) sont prévus à plusieurs reprises.

3. Commande de volet d'atterrissage selon la revendication 1, **caractérisée par**
(a) au moins deux plaquettes (64,66;68,79) en forme de disque circulaire et fixées dans le boîtier (10) parallèlement l'une par rapport à l'autre et coaxialement à l'arbre d'entrée,
(b) des capteurs optiques (94,98;96,100) situés sur les plaquettes (64, 66;68, 70) et
(c) un disque de codage (78,88) qui est relié, de façon résistante à la rotation, à l'arbre d'entrée (22), qui émerge entre les plaquettes (64,66;68,70) et concourt avec les capteurs optiques (94,98;96,100).

4. Commande de volet d'atterrissage selon la revendication 3, **caractérisée par le fait que** les capteurs optiques sont des barrages photoélectriques (94,98;96,100) dont chaque fois un émetteur (94,96) est disposé sur une plaquette (64,68) et un récepteur (98,100) est disposé sur l'autre plaquette (66,70).

5. Commande de volet d'atterrissage selon la revendication 4, **caractérisée par le fait qu**'un disque de diaphragme (80,82; 90,92) est disposé dans le boîtier (10) et parallèlement aux plaquettes (64,66;68,70) et au disque de codage (78,88) chaque fois entre chaque plaquette (64,66 et 68,70 respectivement) et le disque de codage (78,88).

6. Commande de volet d'atterrissage selon les revendications 2 et 3, **caractérisée par le fait que**
(a) à une face frontale du boîtier (10) est fixé un support de palier (14) cylindrique creux rentrant à l'intérieur du boîtier (10),
(b) l'arbre d'entrée (22) est logé au moyen d'au moins deux paliers de roulement (24,26) dans le support de palier (14),
(c) dans le boîtier (10) sont fixées deux paires de plaquettes (64,66;68,79) parallèles en forme de disque circulaire, les plaquettes (64,68) d'une paire entourant le support de palier (14),
(d) un support de disque de codage (72), qui grippe avec une partie en forme de pot (76) autour du support de palier (14) à l'extérieur et qui porte un disque émergeant entre la paire mentionnée de plaquettes (64,66), est relié, de façon résistante à la rotation, à l'arbre d'entrée (22).

7. Commande de volet d'atterrissage selon la revendication 6, **caractérisée par le fait que** le support de disque de codage (72) présente une deuxième partie en forme de pot (84) disposée dos-à-dos à la première partie mentionnée en forme de pot (76) et portant un deuxième disque de codage (88) qui émerge entre la deuxième paire de plaquettes (68,70).
